# FASCICULE DE BREVET EUROPEEN

(11) **EP 1 431 605 B1**
(45) Date de publication et mention de la délivrance du brevet: **21.06.2006**
(21) Numéro de dépôt: 03028931.8
(22) Date de dépôt: 17.12.2003
(51) Int. Cl.: F16D 65/20, F16D 65/097, F16D 65/00

(54) **Dispositif de frein a disque muni d'un atténuateur de vibrations**
Scheibenbremse mit Vibrationsdämpfung
Brake disc with vibration attenuator

(30) Priorité: 20.12.2002 FR 0216473
(43) Date de publication de la demande: 23.06.2004
(73) Titulaire: ROBERT BOSCH GMBH, 70442 Stuttgart (DE)
(72) Inventeur: Picot, Pascal, 77170 Brie Comte Robert Bosch (FR); Fillon, Alain, 17220 Croix Chapeau (FR)
(74) Mandataire: Hurwic, Aleksander Wiktor

(56) Documents cités:
- EP-A- 0 737 823
- EP-A- 0 872 660
- DE-C- 10 031 904
- DE-U- 9 002 441
- US-A- 5 492 202
- PATENT ABSTRACTS OF JAPAN vol. 008, no. 128 (M-302), 14 juin 1984 (1984-06-14) & JP 59 029828 A (NISSAN JIDOSHA KK), 17 février 1984 (1984-02-17)

## Description

La présente invention concerne un dispositif de frein à disque muni d'un atténuateur de vibrations.

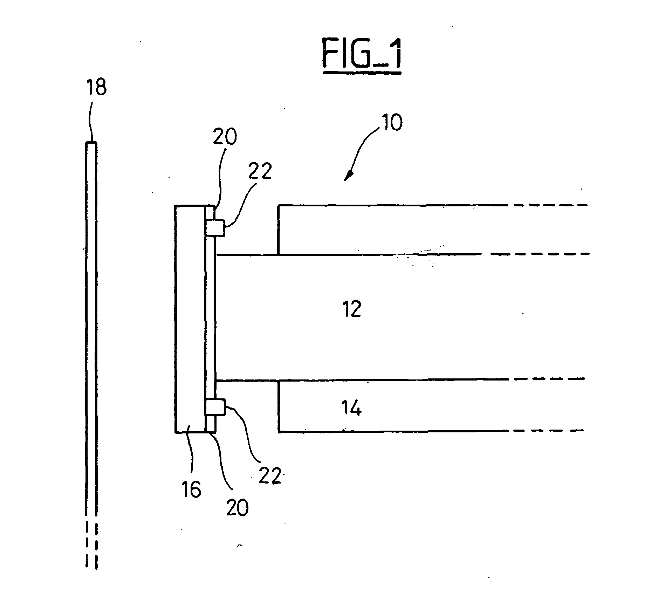

Un dispositif 10 (figure 1) de frein à disque connu comprend un piston 12 coulissant à l'intérieur d'un étrier 14 de façon à pouvoir appliquer une plaquette 16, solidaire de ce piston, contre un disque 18 et freiner ainsi le mouvement d'une roue (non représentée) solidaire de ce disque 18.

Lors d'un freinage, l'application de la plaquette 16 contre le disque 18 génère des vibrations suivant une gamme de fréquences propres à la nature du freinage, plus ou moins intense, et au dispositif 10 de freinage.

Pour atténuer ces vibrations, il est connu d'utiliser un atténuateur 19 fixé sur la face de la plaquette 16, qui est opposée au disque 18.

Un tel atténuateur 19 est constitué d'un matériau 20, généralement élastique et d'une masse 22, le matériau élastique 20 étant appliqué sur la face opposée au disque 18.

Un tel atténuateur permet d'atténuer les vibrations se propageant à une fréquence caractéristique du frein, dénommée par la suite fréquence propre du frein.

La présente invention résulte de la constatation que ce type d'atténuateur est susceptible de modifier les fréquences caractéristiques du frein et ainsi de ne pas avoir l'effet attendu.

La présente invention résulte également de la constatation que la mise en oeuvre d'un atténuateur 19 connu est complexe et coûteuse puisqu'elle nécessite un usinage particulier de chaque plaquette pour positionner les masses 22 et obtenir ainsi la fréquence propre désirée pour chaque atténuateur.

L'invention résulte également de la constatation qu'en cas d'usure d'un atténuateur 20, son remplacement requiert le remplacement de la plaquette dont il est solidaire si les masses sont sur cette plaquette.

C'est pourquoi, l'invention concerne un dispositif de frein à disque muni d'un atténuateur de vibrations disposé entre un piston, coulissant à l'intérieur d'un étrier, et une plaquette de frein, caractérisé en ce que l'atténuateur comprend une masse mobile, en contact avec le piston et la plaquette, et des moyens élastiques couplés à cette masse.

Dès lors, les vibrations du piston ou de la plaquette sont transmises à la masse et sont atténuées par les vibrations de cette masse.

Un atténuateur conforme à l'invention peut être installé de façon simple dans un dispositif de frein donné puisque la masse est mobile. Ainsi, en choisissant une masse dont le couplage avec les moyens élastiques a une fréquence propre correspondant à l'atténuation désirée, l'insertion de cette masse entre le piston et la plaquette permet d'obtenir l'atténuation requise.

L'invention permet ainsi de fabriquer de façon indifférenciée (standard) des éléments tels que la plaquette ou le piston, tandis que différents atténuateurs peuvent être disponibles en fonction des véhicules et/ou des dispositifs de freinage à équiper, par exemple en utilisant différentes masses couplées à des moyens élastiques identiques couplés à des moyens élastiques différents.

Autrement dit l'invention permet de fabriquer des plaquettes et pistons identiques pour une large gamme de véhicules, l'atténuateur étant adapté par la suite à chaque véhicule.

Par ailleurs, un atténuateur conforme à l'invention permet d'avoir une surface de contact accrue entre le matériau élastique et la plaquette.

Dans une réalisation, les moyens élastiques comprennent un matériau élastique disposé entre la masse et le piston de façon à être comprimé par ces derniers.

Selon une réalisation, le matériau élastique disposé entre la masse et le piston maintient la masse dans un évidement du piston.

Selon une réalisation, les moyens élastiques comprennent un matériau élastique disposé entre la plaquette de frein et la masse.

Dans une réalisation, les moyens élastiques comprennent un élément comprimable et des moyens pour faire varier la compression de l'élément.

Selon une réalisation, l'élément comprimable comporte un ressort s'appuyant d'un côté sur la masse mobile et de l'autre côté sur un organe solidaire du piston.

Dans une réalisation, l'organe comporte un écrou permettant de faire varier la compression de l'élément.

D'autres caractéristiques et avantages de l'invention apparaîtront avec la description effectuée ci-dessous à titre et non limitatif, cette description étant effectuée en se référant aux figures suivantes:
la figure 1, déjà décrite, représente un dispositif connu de frein à disque muni d'un atténuateur,
la figure 2 représente une première réalisation d'un dispositif de frein à disque muni d'un atténuateur conforme à l'invention, et
la figure 3 représente une deuxième réalisation d'un dispositif de frein à disque muni d'un atténuateur conforme à l'invention.

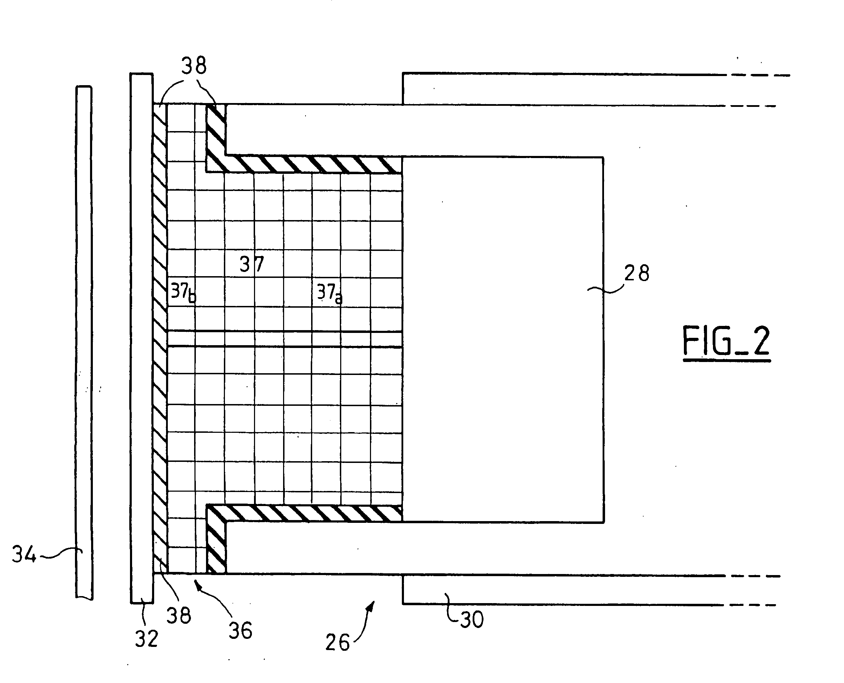

Sur la figure 2 est représenté un dispositif 26 de frein à disque comprenant un piston 28 coulissant à l'intérieur d'un étrier 30, ce piston 28 permettant d'appliquer une plaquette 32 contre un disque 34 pour freiner une roue, non représentée, solidaire de ce disque 34.

Conformément à l'invention, entre le piston 28 et la plaquette 32 est disposé un atténuateur 36 permettant d'atténuer les vibrations du dispositif 26.

A cet effet, cet atténuateur 36 comprend une masse 37 mobile, par exemple métallique. Dans cette réalisation, cette masse 37 comprend une première partie 37ₐ logée à l'intérieur du piston, et une deuxième partie 37_{b} extérieure au piston.

En outre, l'atténuateur 36 comprend un matériau élastique 38 en deux emplacements : d'une part entre le piston 28 et la masse 37 et d'autre part entre la masse 37 et la plaquette 32, le matériau 38 assurant ainsi la mobilité de la masse 37 par rapport au piston et à la plaquette.

Les vibrations de la plaquette 32 et du piston 28 sont atténuées par l'atténuateur 36, la masse 37 couplée au matériau élastique 38 assurant un filtrage des vibrations.

Pour modifier la fréquence propre de l'atténuateur 36, il suffit, par exemple, de remplacer la masse 37 par une autre masse dont au moins une caractéristique physique, telle que la masse volumique, diffère de celle de la masse 37, le couplage entre la masse 37 et le matériau élastique opérant alors suivant une fonction propre différente.

Les contacts du matériau 38 contre la plaquette 32 et le piston 28 sont maintenus par la compression que ces derniers exercent sur ce matériau 38. De ce fait, la présence du matériau 38 au contact avec la plaquette 32 permet avantageusement de compenser le phénomène d'usure tangentielle de la plaquette, c'est-à-dire d'usure inhomogène de la surface de cette tablette.

Par ailleurs, il convient de remarquer que l'on peut remplacer la masse 37 en délogeant simplement cette dernière du piston. En d'autres termes, un changement d'atténuateur s'effectue rapidement et simplement.

Toutefois, pour éviter une telle opération, dans une deuxième réalisation de l'invention, on utilise un atténuateur dont la fonction de transfert est réglable sans nécessiter le remplacement d'un élément.

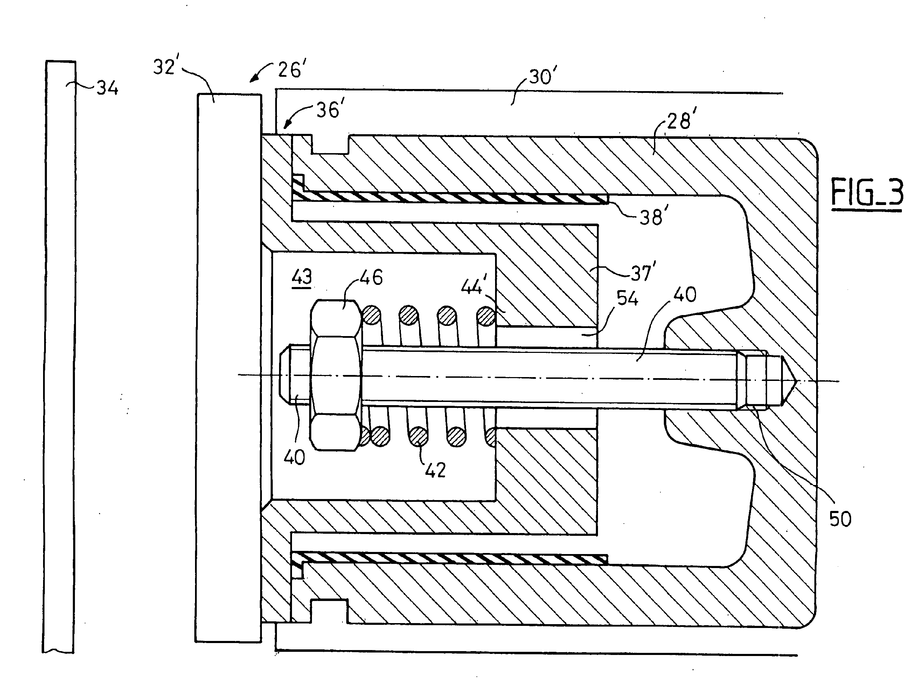

Un tel atténuateur 36' (figure 3) comprend aussi une masse 37' logée dans un piston 28' et maintenue entre ce dernier et une plaquette 32' de façon analogue à l'atténuateur 36, c'est-à-dire de façon amovible. En outre, un matériau 38' élastique est disposé entre le piston 28' et la masse 37' pour éviter le bruit de contact entre la masse et le piston.

Toutefois, cette deuxième réalisation diffère de la première en ce qu'aucun matériau atténuateur n'est situé entre cette masse 37' et la plaquette 32'. De plus, le maintien de la masse par le ressort permet à cette dernière de se déplacer par rapport au piston et à la plaquette.

Par ailleurs, un contact entre le piston 28' et la masse 37' est faiblement opéré par l'intermédiaire d'un matériau 38' intermédiaire, permettant d'atténuer à nouveau des vibrations. Toutefois, les surfaces de contact entre le matériau 38' et le piston, d'un côté, et la masse, d'un autre côté, peuvent être augmentées ou réduites, voire éliminées dans d'autres réalisations de l'invention.

Ce dispositif 36' diffère aussi du dispositif 36 en ce que le piston 28' comprend un évidement taraudé 50 de façon à solidariser la masse 37' au piston 28' au moyen d'une vis 40, d'un écrou 46 et d'un ressort 42.

Cette vis 40, qui traverse un évidement 54 de la masse 37', permet d'exercer une contrainte variable sur le ressort 42 s'appuyant, d'un côté, contre une face 44 d'un évidement 43 de la masse 47 et, d'un autre côté, sur un boulon 46.

Dès lors, en fonction de la contrainte exercée par la vis 40 sur le ressort 42, la fréquence propre de l'atténuateur 36 formé par ce ressort et la masse 37' est modifiée.

## Revendications

1. Dispositif (26;26') de frein à disque muni d'un atténuateur (36;36') de vibrations situé entre un piston (28,28'), coulissant à l'intérieur d'un étrier (30;30'), et une plaquette (32;32') de frein, l'atténuateur comprenant une masse mobile (37;37') en contact avec le piston (28;28') et la plaquette (32;32'), et des moyens élastiques (38;38';42), comprenant un élément comprimable (42) couplés à cette masse, **caractérisé en ce que** l'élément comprimable comporte un ressort (42) s'appuyant d'un côté sur la masse mobile (37') et de l'autre côté sur un organe (50) solidaire du piston.

2. Dispositif selon la revendication 1 **caractérisé en ce que** les moyens élastiques (38;38') comprennent un matériau élastique (38;38') disposé entre la masse et le piston de façon à être comprimé par ces derniers.

3. Dispositif selon la revendication 2 **caractérisé en ce que** le matériau élastique (38;38') disposé entre la masse (37;37') et le piston (30;30') maintient la masse (37;37') dans un évidement du piston (30;30').

4. Dispositif selon la revendication 1, 2 ou 3, **caractérisé en ce que** les moyens élastiques (38;38';42) comprennent un matériau élastique disposé entre la plaquette de frein et la masse.

5. Dispositif selon l'une des revendications précédentes **caractérisé en ce que** les moyens élastiques comprennent des moyens (46) pour faire varier la compression de l'élément.

6. Dispositif selon la revendication 5 **caractérisé en ce que** l'organe (50) comporte un écrou (46) permettant de faire varier la compression de l'élément.

## Claims

1. Disk brake device (26; 26') fitted with a vibration damper (36; 36') situated between a piston (28; 28'), sliding inside a caliper (30; 30'), and a brake pad (32; 32'), said damper comprising a mobile mass (37; 37') in contact with the piston (28; 28') and the pad (32; 32'), and elastic means (38 ; 38'; 42) coupled to this mass, **characterized in that** the elastic means comprise a spring (42) pressing on the one hand on the mobile mass (37') and on other hand on a member (50) integral with the piston.

2. Device according to Claim 1, **characterized in that** the elastic means (38 ; 38') comprise an elastic material (38 ; 38') arranged between the mass and the piston so as to be compressed by these.

3. Device according to claim 2 **characterized in that** the elastic material (38 ; 38') arranged between the mass (37; 37') and the piston (30 ; 30') holds the mass (37 ; 37') in a hollow of the piston (30 ; 30').

4. Device according to claim 1, 2 or 3 **characterized in that** the elastic means (38 ; 38' ; 42) comprise an elastic material arranged between the break pad and the mass.

5. Device according to one of the preceding claims **characterized in that** the elastic means comprise means (46) for varying the compression of the element.

6. Device according to Claim 5, **characterized in that** the member (50) comprises a nut (46) for varying the compression of the element.

## Patentansprüche

1. Scheibenbremsvorrichtung (26; 26'), die mit einem Vibrationsdämpfer (36; 36') ausgestattet ist, der zwischen einem in einem Bremssattel (30; 30') gleitenden Kolben (28; 28') und einem Bremsklotz (32; 32') angeordnet ist, wobei der Dämpfer eine bewegliche Masse (37; 37'), die mit dem Kolben (28; 28') und dem Bremsklotz (32; 32') in Kontakt ist, und mit dieser Masse verbundene elastische Mittel (38; 38'; 42) aufweist, welche ein zusammendrückbares Element (42) aufweisen, **dadurch gekennzeichnet, dass** das zusammendrückbare Element eine Feder (42) aufweist, die auf einer Seite an der beweglichen Masse (37') und auf der anderen Seite an einem fest mit dem Kolben verbundenen Organ (50) anliegt.

2. Vorrichtung nach Anspruch 1, **dadurch gekennzeichnet, dass** die elastischen Mittel (38; 38') ein elastisches Material (38; 38') aufweisen, das zwischen der Masse und dem Kolben so eingebracht ist, dass es von diesen zusammengedrückt wird.

3. Vorrichtung nach Anspruch 2, **dadurch gekennzeichnet, dass** das zwischen der Masse (37; 37') und dem Kolben (28; 28') eingebrachte elastische Material (38; 38') die Masse (37; 37') in einer Vertiefung des Kolbens (28; 28') hält.

4. Vorrichtung nach Anspruch 1, 2 oder 3, **dadurch gekennzeichnet, dass** die elastischen Mittel (38; 38'; 42) ein elastisches Material aufweisen, das zwischen dem Bremsklotz und der Masse eingebracht ist.

5. Vorrichtung nach einem der vorhergehenden Ansprüche, **dadurch gekennzeichnet, dass** die elastischen Mittel Mittel (46) aufweisen, um die Kompression des Elements variieren zu lassen.

6. Vorrichtung nach Anspruch 5, **dadurch gekennzeichnet, dass** das Organ (50) eine Schraubenmutter (46) aufweist, mit der die Kompression des Elements variiert werden kann.
